# EUROPÄISCHE PATENTANMELDUNG

(11) **EP 1 862 520 A1**
(43) Veröffentlichungstag der Anmeldung: **05.12.2007**
(21) Anmeldenummer: 07108509.6
(22) Anmeldetag: 21.05.2007
(51) Int. Cl.: C09J 201/02, C09J 133/06, C09J 7/02

(54) **Folienetiketten**

(30) Priorität: 01.06.2006 EP 06114862
(71) Anmelder: BASF Aktiengesellschaft, 67056 Ludwigshafen (DE)
(72) Erfinder: Schöcker, Petra, 68642, Bürstadt (DE); Beyers, Cornelis Petrus, 67122, Altrip (DE); Kirsch, Stefan, 55268, Nieder-Olm (DE); Pietsch, Ines, 67346, Speyer (DE); Kutschera, Michael, 67117, Limburgerhof (DE)

(57) **Zusammenfassung**

Verwendung eines wässrigen Haftklebstoffs zur Herstellung von selbstklebenden Artikeln, dadurch gekennzeichnet, dass der wässrige Haftklebstoff ein in Wasser dispergiertes Polymer als Bindemittel (kurz Polymer) und ein in Wasser gelöstes Polymer mit hydrophilen Gruppen, ausgewählt aus primären Aminogruppen und Hydroxylgruppen (kurz Lösungs-Polymer) enthält.

## Beschreibung

Die Erfindung betrifft die Verwendung eines wässrigen Haftklebstoffs zur Herstellung von selbstklebenden Artikeln, insbesondere Folienetiketten, dadurch gekennzeichnet, dass der wässrige Haftklebstoff ein in Wasser dispergiertes Polymer als Bindemittel (kurz Polymer) und ein in Wasser gelöstes Polymer mit hydrophilen Gruppen, ausgewählt aus primären Aminogruppen und Hydroxylgruppen (kurz Lösungs-Polymer) enthält.

Folienetiketten bestehen im wesentlichen aus einer Polymerfolie als Träger und einer darauf aufgebrachten Haftklebstoff-schicht. Der Träger ist für viele Anwendungen transparent. Bei Einwirkung von Wasser kommt es häufig zum sogenannten "Weißanlaufen" darunter ist eine Trübung in der Klebstoffschicht zu verstehen, die durch das Eindringen von Wasser verursacht wird. Durch das Weißanlaufen werden die anwendungstechnischen Eigenschaften verschlechtert; naturgemäß beeinträchtigt die Trübung insbesondere bei transparenten Folienetiketten das optische Erscheinungsbild.

Bekannt ist z. B. aus EP-A 1 378 527, EP-A 623 659 oder WO 98/44064, das Weißanlaufen bei wässrigen Polymerdispersionen durch spezielle Aufbaukomponenten des dispergierten Polymeren zu vermindern. Das erreichte Ergebnis ist noch nicht in vollem Umfang zufriedenstellend. Außerdem eigenen sich derartige speziell hergestellte Polymere dann auch im allgemeinen nur noch für spezielle Verwendungen. Gewünscht ist daher ein einfaches Verfahren, das Weißanlaufen möglichst vollständig zu verhindern.

Aufgabe der vorliegenden Erfindung war daher die Verminderung oder Vermeidung des Effekts des Weißanlaufens durch möglichst einfache Maßnahmen.

Demgemäss wurde die eingangs definierte Verwendung gefunden: Gefunden wurden auch selbstklebende Artikel, insbesondere Folienetiketten, welche durch diese Verwendung erhältlich sind.

Die vorliegende Erfindung betrifft die Verwendung eines wässrigen Haftklebstoffs.

Der Haftklebstoff enthält ein in Wasser dispergiertes Polymer als Bindemittel.

### Zum Polymer

Das Polymer besteht vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Insbesondere ist das Polymer zu mindestens 60 Gew.-%, besonders bevorzugt zu mindestens 80 Gew.-% und ganz besonders bevorzugt zu mindestens 90 Gew.-% aus C₁ bis C₂₀ Alkyl(meth)acrylaten aufgebaut.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z. B. Monomere mit Carbonsäure, Sulfonsäure oder Phosphonsäuregruppen (kurz-Säuremonomere). Bevorzugt sind Carbonsäuregruppen. Genannt seien z. B. Acrylsäure, Methacrylsäure, Itaconsäure, Maleinsäure oder Fumarsäure.der gehalt an Säure-Monomeren im Polymer kann z. B. 0 bis 10 Gew. %, insbesondere 0,05 bis 5 Gew. %, bezogen auf das Polymer betragen. Die Säuregruppen können in Form ihrer Salze vorliegen.

Weitere Monomere sind z. B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Weitere Monomere werden im allgemeinen in untergeordneten Mengen eingesetzt, ihr Anteil liegt insgesamt vorzugsweise unter 10 Gew. %, insbesondere unter 5 Gew. %.

Monomere mit Hydroxylgruppen oder primären Aminogruppen werden, wenn überhaupt, vorzugsweise nur in Mengen kleiner 3 Gew. % insbesondere kleiner 1 Gew. % mitverwendet. Die Mitverwendung von Monomeren mit Hydroxylgrupen oder Aminogruppen oder von sonstigen weiteren Monomeren ist i rahmen dieser Erfindung nicht zwingend notwendig.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 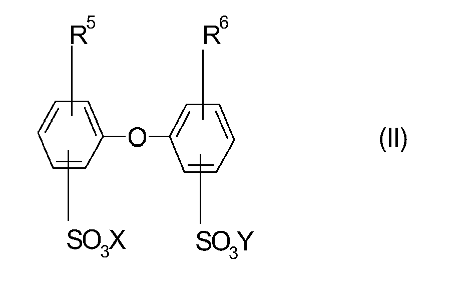 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®}2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®}2 A1, Emulan^{®} NP 50, Dextrol^{®} OC 50, Emulgator 825, Emulgator 825 S, Emulan^{®}OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 400 nm, insbesondere kleiner 200 nm. Besonders bevorzugt liegt die mittlere Teilchengröße zwischen 140 und 200 nm.

Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mäschtle, Makromolekulare Chemie 185 (1984), Seite 1025 - 1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differential Scanning Calorimetrie (s. z. B. ASTM 3418/82, sog. "midpoint temperature") bestimmen.

### Zum Lösungs-Polymer

Der Haftklebstoff enthält weiterhin ein in Wasser gelöstes Polymer mit hydrophilen Gruppen, ausgewählt aus primären Aminogruppen (-NH2) und Hydroxylgruppen (kurz Lösungs-Polymer).

Der Gehalt der hydrophilen Gruppen im Lösungs-Polymer beträgt vorzugsweise mindestens 0,05 Mol, insbesondere mindestens 0,15 Mol, besonders bevorzugt mindestens 0,3 Mol, ganz besonders bevorzugt mindestens 0,5 Mol oder in einer besonderen Ausführungsform mindestens 0,7 mol bzw. mindestens 1 Mol hydrophile Gruppen auf 100 g Lösungs-Polymer. Der Gehalt an hydrophilen Gruppen beträgt im allgemeinen nicht mehr als 2,3 mol/100 g Polymer, was rechnerische dem Gehalt an primären Aminogruppen im Polyvinylamin oder Hydroxylgruppen im Polyvinylalkohol entspricht, insbesondere ist der Gehalt nicht höher als 2,0 mol/100 g Polymer.

Lösungs-Polymere mit Hydroxylgruppen oder primären Aminogruppen sind allgemein bekannt.

Vorzugsweise sind die Lösungs-Polymere ebenfalls durch radikalische Polymerisation von ethylenisch ungesättigten Verbindungen erhältlich.

Als Lösungs-Polymer mit Hydroxylgruppen seien z. B. Polyvinylalkohol oder Polyvinylether oder Copolymere von Vinylalkohol oder Vinylether genannt, wobei die Polyvinylether, bzw. Copolymere ganz oder teilweise verseift sind, so dass statt der Ethergruppe eine Hydroxylgruppe an das Polymerrückgrat gebunden ist. Geeignet sind z. B. Polyvinylether oder Copolymere mit einem Verseifungsgrad der Etherguppen von 10 bis 100 mol %.

Als Lösungs-Polymer mit primären Aminogruppen seien z. B. Polyvinylamin oder Polyvinylformamid oder Copolymere des Vinylamins oder Vinylformamids genannt, wobei die Polyvinylformamide bzw. die Copolymere ganz oder teilweise hydrolysiert sind, so dass statt der Formamidgruppe eine primäre Aminogruppe an das Polymerrückgrat gebunden ist. Geeignet sind z. B. Polyvinyformamide bzw. dessen Derivate mit einem Verseifungsgrad der Formamidgruppen von 10 bis 100 mol-%.

Das zahlenmittlere Molgewicht des Lösungs-Polymeren ist vorzugsweise größer als 500, besonders bevorzugt größer als 1000 und ganz besonders bevorzugt größer als 1500 bzw. 2000 g/mol; es ist vorzugsweise maximal 200 000 g/mol, besonders bevorzugt maximal 130 000 g/mol und ganz besonders bevorzugt maximal 80 000 g/mol bzw. 50 000 g/mol. In einer ganz besonderen Ausführungsform ist das Molgewicht maximal 20 000 g/mol bzw. maximal 15 000 g/mol.

Das Lösungs-Polymer ist im Wasser der Polymerdispersion gelöst. Die Löslichkeit des Lösungs-Polymeren in Wasser beträgt vorzugsweise mindestens 50 g, besonders bevorzugt mindestens 100 g, ganz besonders bevorzugt mindestens 200 g Lösungs-Polymer auf 1000 g Wasser (bei 21°C).

Geeignete Lösungs-Polymere sind z. B. unter den Markennamen Lupamin (Polyvinlamin) oder Mowiol (Polyvinylalkohol) erhältlich.

Das Lösungs-Polymer kann der Dispersion des Polymeren einfach zugesetzt werden und löst sich unter Rühren leicht im Wasser.

Die erhaltene Mischung ist lagerstabil.

Die Menge des Lösungs-Polymeren beträgt vorzugsweise 0,1 bis 10 Gew. Teile, besonders bevorzugt 0,2 bis 5 Gew. teile, ganz besonders bevorzugt 0,4 bis 3 Gew.Teile auf 100 Gew. Teile des dispergierten Polymeren.

### Zum Haftklebstoff

Die Haftklebstoffe können allein aus dem Polymeren bzw. der wässrigen Dispersion des Polymeren und dem Lösungs-Polymer bestehen.

Der Haftklebstoff enthält das Polymer vorzugsweise in Form der wässrigen Polymerdispersion, wie sie durch die Emulsionspolymerisation erhalten wurde oder erhältlich ist.

Der Haftklebstoff kann jedoch auch noch weitere Zusatzstoffe enthalten.

In Betracht kommt z. B. ein Tackifier, d.h. ein klebrigmachendes Harz. Tackifier sind z. B. aus Adhesive Age, Juli 1987, Seite 19-23 oder Polym. Mater. Sci. Eng. 61 (1989), Seite 588-592 bekannt.

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht Mw unter 30 000. Die Polyacrylate bestehen bevorzugt zu mindestens 60, insbesondere mindestens 80 Gew.-% aus C1-C8-Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wässrigen Dispersionen der Polymerisate zugesetzt werden. Vorzugsweise liegen die Tackifier dabei selber in Form einer wässrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat (fest/fest).

Neben Tackifiern können z. B. noch weitere Additive z. B. Verdickungsmittel, vorzugsweise Assoziativverdicker, Entschäumer, Weichmacher, Pigmente, Netzmittel oder Füllstoffe im Haftklebstoff enthalten sein.

Für eine bessere Benetzung von Oberflächen können die Haftklebstoffe insbesondere Benetzungshilfsmittel, z. B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Erfindungsgemäß werden die Haftklebstoffe für die Herstellung von selbstklebenden Artikeln, insbesondere Folienetiketten verwendet.

Die Haftklebstoffe eignen sich zur Herstellung selbstklebender Artikel wie Etiketten, Folien oder Klebebänder. Der Haftklebstoff kann durch übliche Methoden, z. B. durch Rollen, Rakeln, Streichen etc. auf Träger, z. B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Insbesondere eignen sich transparente Träger, z. B. aus Polyolefinen, insbesondere Polyethylen oder orientiertem Polypropylen (oPP) oder Polyestern.

Das Wasser kann bevorzugt durch Trocknung bei 50 bis 150°C entfernt werden. Die Träger können vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Die erfindungsgemäßen selbstklebenden Artikel haben sehr gute Klebeeigenschaften, insbesondere eine gute Adhäsion zu den Substraten und eine hohe Kohäsion (innere Festigkeit in der Klebstoffschicht).

Insbesondere eignen sich die erfindungsgemäßen Haftklebstoffe auch für transparente Träger, insbesondere auch für Folienetiketten, da das bei Einwirkung von Wasser häufig auftretende sog. "Weißanlaufen" nicht auftritt, zumindest aber vermindert ist. Die anwendungstechnischen Eigenschaften bleiben daher auch bei Einwirkung von Wasser gut, eine Trübung oder sonstige Verschlechterung des optischen Erscheinungsbildes ist nicht oder kaum zu beobachten.

### Anwendungstechnische Prüfung

### Herstellung der Klebstoffe

### Ausgangsstoffe

Wässrige Dispersionen eines Polyacrylats auf Basis von Ethylhexylacrylat (Glasübergangstemperatur von -24,6 °C).

Lupamin^{®} 1595 SF, ein wasserlösliches Polyvinylamin, (Hydrolysegrad 95 %, d.h. 95 % der ursprünglichen Vinylformamid - Einheiten liegen im Polymer als Vinylamin -Einheit vor (Molgwicht kleiner 10 000 g/mol)

Mowiol^{®} 1579 (15 Gew.-%ig in Wasser), ein wasserlöslicher Polyvinylalkohol mit (Hydrolysegrad 79 %, d.h. 79 % der ursprünglichen Vinylether- Einheiten liegen im Polymer als Vinyalkohol - Einheit vor (Molgewicht kleiner 10 000 g/mol).

Das Polyacrylat wurde diafiltriert und dann eine definierte Menge Natriumsulfat (als 10%ige Lösung im Wasser) zugesetzt. (Vergleichsversuche). Bei den erfindungsgemäßen Versuchen wurde die gleiche Menge Natriumsulfat (als 10 %ige Lösung in Wasser) und das Lösungs-Polymer zugesetzt. Durch Zusatz von Wasser wurde immer der gleiche Wassergehalt eingestellt

Die Haftklebstoffe wurden mit einem Spaltrakel, mit einer Spaltweite von 60 µm, direkt auf Polyesterfolie als Träger beschichtet und 3 Minuten bei 120°C getrocknet.

Streifen der beschichteten Polyesterfolie wurden eine definierte Zeit in Wasser getaucht und danach das optische Erscheinungsbild nach Noten von 0 bis 4 beurteilt:
- 0:: keine Trübung
- 1:: sehr leichte Trübung
- 2:: stärkere Trübung
- 3:: starke Trübung
- 4:: sehr starke Trübung

**Tabelle: Ergebnisse % Angaben sind Gew.-%**

| Eintauchzeit in Wasser, in Sekunden (s), in Minuten (min), oder Sunden (h) | +5% NaSO4 | + 5 % NaSO4 + 1 % Mowiol | +15 % NaSO4 | +15 % NaSO4 + 2% Lupamin |
|---|---|---|---|---|
| 10s | 0 | 0 | 1 | 1 |
| 30 s | 0 | 0 | 1 | 1 |
| 60 s | 0 | 0 | 1-2 | 1 |
| 3 min | 1 | 0 -1 | 2 | 1 -2 |
| 5 min | 1-2 | 1 | 3 | 2 |
| 10 min | 2 | 2 | 4 | 3 |

## Patentansprüche

1. Verwendung eines wässrigen Haftklebstoffs zur Herstellung von selbstklebenden Artikeln, **dadurch gekennzeichnet, dass** der wässrige Haftklebstoff ein in Wasser dispergiertes Polymer als Bindemittel (kurz Polymer) und ein in Wasser gelöstes Polymer mit hydrophilen Gruppen, ausgewählt aus primären Aminogruppen und Hydroxylgruppen (kurz Lösungs-Polymer) enthält.

2. Verwendung gemäß Anspruch 1, **dadurch gekennzeichnet, dass** es sich bei dem Polymer um ein durch radikalische Polymerisation erhältliches Polymer handelt, welches zu mindestens 60 Gew.-% aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, aufgebaut ist.

3. Verwendung gemäß Anspruch 1 oder 2, **dadurch gekennzeichnet, dass** das Polymer ein Emulsionspolymerisat ist und zu mindestens 60 Gew. % aus C₁ bis C₂₀ Alkyl(meth)acrylaten aufgebaut ist.

4. Verwendung gemäß einem der Ansprüche 1 bis 3, **dadurch gekennzeichnet, dass** das Lösungs-Polymer mindestens 0,05 Mol hydrophile Gruppen auf 100 g Lösungs-Polymer enthält

5. Verwendung gemäß einem der Ansprüche 1 bis 4, **dadurch gekennzeichnet, dass** das Lösungs-Polymer mindestens 0,15 Mol hydrophile Gruppen auf 100 g Lösungs-Polymer enthält

6. Verwendung gemäß einem der Ansprüche 1 bis 5, **dadurch gekennzeichnet, dass** das Lösungs-Polymer ein zahlenmittleres Molgewicht von 500 bis 200 000 hat.

7. Verwendung gemäß einem der Ansprüche 1 bis 6, **dadurch gekennzeichnet, dass** das Lösungs-Polymer in Wasser eine Löslichkeit von mindestens 50 g Lösungs-Polymer auf 1000 g Wasser (bei 21 °C) hat

8. Verwendung gemäß einem der Ansprüche 1 bis 7, **dadurch gekennzeichnet, dass** die Menge des Lösungs-Polymer 0,05 bis 10 Gew. Teile auf 100 Gew. Teile des dispergierten Polymeren beträgt.

9. Selbstklebenden Artikel, erhältlich durch Verwendung gemäß einem der Ansprüche 1 bis 8.

10. Folienetiketten, erhältlich durch Verwendung gemäß einem der Ansprüche 1 bis 8.

11. Folienetiketten gemäß Anspruch 10 mit einer Polyolefinfolie oder Polyesterfolie als Träger.

12. Folienetiketten gemäß Anspruch 10 mit einer Polyethylenfolie oder einer oPP (orientiertes Propylen)-Folie als Träger.
